# EUROPEAN PATENT SPECIFICATION

(11) **EP 2 747 593 B1**
(45) Date of publication and mention of the grant of the patent: **11.10.2017**
(21) Application number: 12761551.6
(22) Date of filing: 17.08.2012
(51) Int. Cl.: A43D 1/02, G01B 11/24, G01C 11/04, G06K 9/48, G06T 7/60, G06T 7/00, G06K 9/00, G06T 7/62

(54) **METHOD AND SYSTEM FOR OPTIMISED SELECTION OF FOOTWEAR OR CLOTHING ARTICLES**
VERFAHREN UND SYSTEM ZUR OPTIMIERTEN AUSWAHL VON SCHUHWERK- UND BEKLEIDUNGSARTIKEL
PROCEDE ET SYSTEME POUR LA SÉLECTION OPTIMISÉE DE CHAUSSURES ET ARTICLES D'HABILLEMENT

(30) Priority: 25.08.2011 IT MI20111550
(43) Date of publication of application: 02.07.2014
(73) Proprietor: Magari S.r.l., 20145 Milano (IT)
(72) Inventor: SALICE, Fabio, 20145 Milano (IT); BERNASCONI, Giuseppe, 20145 Milano (IT)
(74) Representative: Maccalli, Marco
(86) International application number: PCT/EP2012/066107
(87) International publication number: WO 2013/026798

(56) References cited:
- US-A- 5 164 793
- US-A1- 2004 073 407
- US-A1- 2006 140 463
- US-A1- 2009 051 683
- US-B1- 6 546 356

## Description

The present invention generally relates to the field of footwear, and in particular to an automated system for personalized selection of the shoe size.

Nowadays, electronics applications have become very numerous both in the industrial and in the domestic field, passing by the working and service ones. For example, thanks to the ongoing technology development, performing quick and accurate measurements on the human body now has become possible. These measures may be advantageously exploited to provide services that support a potential buyer on choosing clothing and/or shoes.

Referring to the field of footwear, and in particular to the tailored shoes manufacturing field, measuring apparatuses are known, which carry out, by means of scanning devices, measurements of the foot morphology, generating measurement data relating to the geometric shape of said foot. Based on these measurement data, a dedicated computer program is able to create a model of customized shoe, to be used for the creation of a tailored shoe. A solution of this type, however, has the drawback of requiring a relatively complex and expensive electronic equipment (particularly, a three-dimensional scanning device); moreover, for the collection of measurement data, it is necessarily required that the buyer in person goes to the place where such a measuring apparatus is located.

Turning to the field of mass-produced shoes sold in standard sizes, a known solution provides that the buyer makes some photos of a checkerboard reference grid printed using the home printer; at this point, after having placed the foot on such grid, and after having taken other photos of the grid so as to frame the foot as well, all the taken photos are sent, for example through the Internet, to a central server. A suitable data processing program loaded on the server is configured to estimate the size of the photographed foot by counting squares on the grid, and to choose for each model of shoe offered for sale a corresponding optimal size based on the estimated size (it has to be noted that in general the shoe size of a same person may vary depending on the selected shoe model). A solution of this type is adapted to be used to make online purchases directly from home, without the need of having to go in any specialized shop, since the acquisition of data does not occur by means of complex three-dimensional scanning operations, but rather with simple photographs obtainable by a simple digital camera; moreover, all the computation operations on the acquired data are executed at the remote server side. However, even this solution is not free from drawbacks. Firstly, the measurements carried out by counting the squares on the grid visible in the photos do not enable to reach a sufficiently high degree of precision, because of the inevitable parallax errors which depend on the particular frame being used. In addition, in order to perform a complete measurement of the whole foot, this method requires that the grid is larger than the foot itself; therefore, since almost all home printers are able to print on sheets of *A4* or *letter* size, and since these sizes are generally insufficient to contain a foot of an adult person, this method lends itself to be used almost exclusively for the purchase of children's shoes.

In the light of the foregoing, the applicant has observed that the known solutions are not efficient under different points of view.

US 6,546,356 discloses an imaging method that places an object upon a background pattern of regular repetitive marks and records a 2D image that is then processed for determining where in the image the repetitive marks are interrupted by the object, thereby indirectly determining the edge of the object. Multiple 2D images from different perspectives are used to create a 3D image of the object. When the object is a human food, individual bar codes and imaged foot dimensions can be cross-referenced to manufactured shoe sizes for accurate ordering of correctly sized footwear.

US 2004/073407 discloses a system and method for sizing shoes for the foot of a user. A computer is provided that is adapted to receive a digital image of the foot, the computer having stored thereon a software package that includes an image processing component and a foot data component and optionally. The image processing component is adapted for receiving the digital image of the foot and producing a trace outline of the foot. The foot data component is adapted to receive the trace outline and determine foot data from the trace outline. The comparator component is adapted to receive the foot data and generate, based on the foot data, at least one of an indicator of the shoe size of the foot and an indicator of the best fitting shoe from among a plurality of shoes.

US 2006/140463 discloses a photogrammetric method and an arrangement for the three-dimensional digitizing of bodies and body parts which are covered with a marked, elastic cover, which comprises high-contrast marks which are photogrammetrically analysable, and which are photographed from different shooting positions. For the purpose, at least one camera is moved around the body with a simple, inaccurate guide and images overlapping each other are taken from different positions in space to cover both the body and several of the marks of the support. Methods of photogrammetry as well as digital image processing and pattern recognition provide precise space coordinates of the body to be digitized.; One exemplary application is the digitizing of the foot/lower leg portion for the selection or custom manufacture of anatomically well-fitting footwear, the digitizing of the leg portion for the manufacture or selection of well-fitting compression stockings.

One or more aspects of a solution in accordance with specific embodiments of the invention are indicated in the independent claims, with advantageous features thereof which are indicated in the dependent claims (the text of which is incorporated herein by reference).

More specifically, one aspect of a solution in accordance with an embodiment of the present invention relates to a method for selecting the size of a clothing or footwear article. The method comprises the step of acquiring at least one digital photo of a part of the body of a subject associated with a reference graphical element; said part of the body corresponds to the article. The method further comprises the step of selecting one of a plurality of predefined three-dimensional models of the photographed body part in accordance with said at least one digital photo by exploiting said reference graphic element, and the step of determining the size of the article based on the selected predefined model, wherein the phase of determining comprises the steps a), b) and c) as defined in claim 1. A further aspect of a solution in accordance with an embodiment of the invention relates to a system for selecting the size of a clothing or footwear article as defined in claim 9. A solution in accordance with one or more embodiments of the invention, as well as further features and advantages thereof, will be better understood with reference to the following detailed description, given purely by way of non limitative example, to be read in conjunction with the accompanying drawings (in which corresponding elements are indicated with the same or similar references and their explanation is not repeated for brevity). In this respect, it is expressly understood that the figures are not necessarily to scale (with some details that may be exaggerated and/or simplified) and that, unless otherwise indicated, they are simply used to conceptually illustrate the described structures and procedures. In particular:
**Figure 1** illustrates in a schematic way a possible scenario wherein a method for the optimised selection of the size of a shoe in accordance with an embodiment of the present invention is used;
**Figure 2A** illustrates a calibration model used in the method in accordance with an embodiment of the present invention;
**Figure 2B** shows a reference model used in the method in accordance with an embodiment of the present invention;
**Figure 3A** illustrates a possible example of calibration digital photos obtained by photographing a calibration sheet based on the calibration model from three different points of view;
**Figure 3B** illustrates a possible example of left foot and right foot digital photos obtained by photographing each foot from three different points of view when said foot is placed on a reference sheet based on the reference model;
**Figure 4** is a flow diagram that illustrates the main steps performed by a server to generate three-dimensional sample shapes to be used for choosing the size number of the user-selected footwear;
**Figure 5** is a flowchart illustrating the operations performed by the server during the first phase of the flow diagram of **Figure 4****;**
**Figure 6A** is a flow chart illustrating the operations performed by the server during the second phase of the flow diagram of **Figure 4****;**
**Figure 6B** shows a photo of the left foot and a corresponding homographed photo generated following the application of a homographic transformation;
**Figure 6C** shows a first foot contour extracted from the photo of **Figure 6B****;**
**Figure 6D** shows a second foot contour extracted from the photo of **Figure 6B****;**
**Figure 7** is a flowchart illustrating the operations performed by the server during the third stage of the flow diagram of **Figure 4****;**
**Figure 8A** is a flow chart illustrating the operations performed by the server during the fourth stage of the flow diagram of **Figure 4****;**
**Figure 8B** shows an example of a projection of a three-dimensional reference shape superimposed to the contour of **Figure 6D****;**
**Figure 8C** shows an example of a projection of a three-dimensional reference shape superimposed to the contour of **Figure 6D** in which the figure of merit is minimized, and
**Figures 8D**-**8I** show some phases of the method for the measurement of the length of the foot.

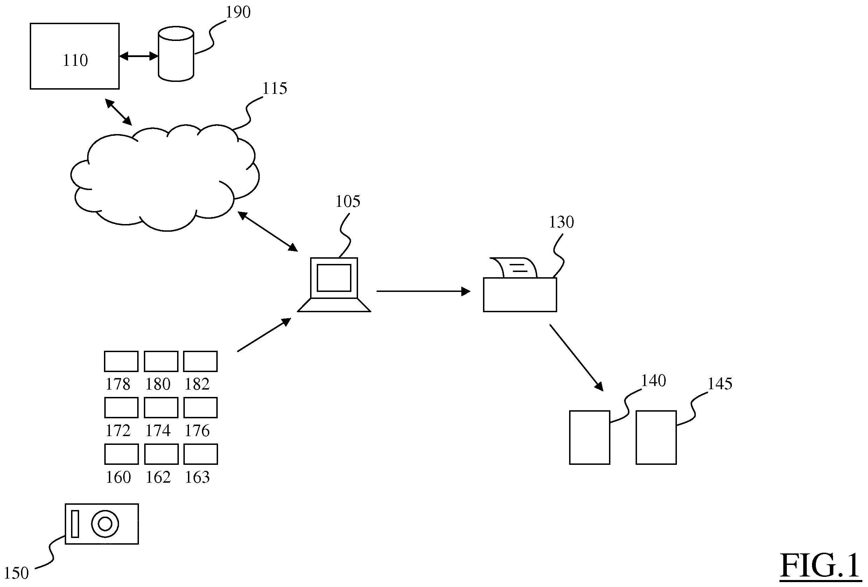

Referring to the figures, **Figure 1** schematically illustrates a possible scenario wherein a method for the optimised selection of the size of a shoe according to an embodiment of the present invention is used.

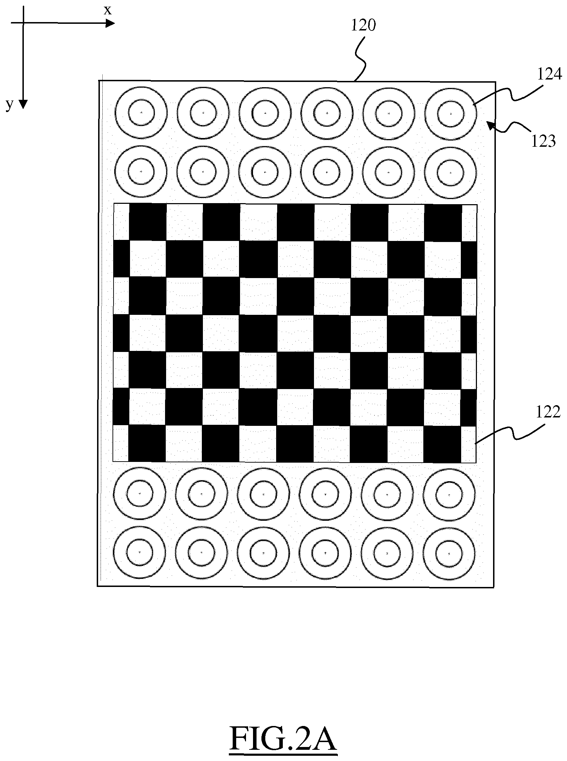

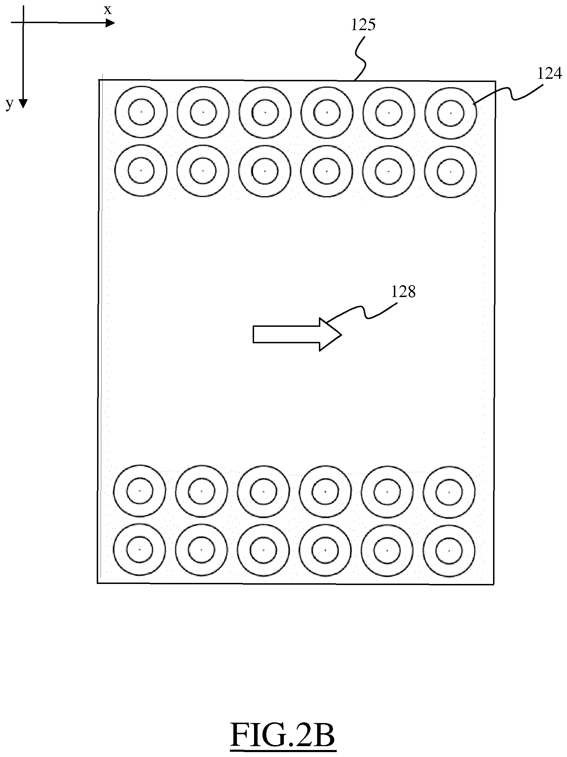

Through a terminal **105** (hereinafter, "client"), a user who wishes to purchase a particular model of shoe may in particular establish connection to a remote service centre **110** (hereinafter, "server") through a interconnection network **115.** For example, the client **105** may be a Personal Computer (PC), a smartphone, or a tablet PC, and the interconnection network **115** may be the Internet. The server **110** sends to the client **105** two digital images, called calibration model **120** and reference model **125.** The calibration model **120** in accordance with an embodiment of the present invention is illustrated in **Figure 2A****,** while the reference model **125** in accordance with an embodiment of the present invention is illustrated in **Figure 2B****.**

As can be seen in **Figure 2A****,** the calibration digital model **120** is an image having a rectangular shape, with two short sides which horizontally extend along the direction indicated in figure by means of the **x**-axis, and two long sides that vertically extend along the direction indicated in figure by means of the y-axis. The central portion (with respect to the **y**-axis) of the calibration model **120** is provided with a checkerboard **122** comprising a plurality of black and white squares. Both the upper and the lower portions of the calibration model **120** are provided with two respective overlapping rows **123** of reference elements **124.** All reference elements **124** are equal to each other; specifically, each reference element **124** consists of two concentric circles. All four rows **123** include the same number of reference elements **124.** The centres of all reference elements **124** of the generic row **123** are aligned with each other along a direction parallel to the **x**-axis, while the centers of the i-th reference elements **124** of all the rows **123** are aligned with each other along a direction parallel to the y-axis.

As shown in **Figure 2B****,** the reference model **125** differs from the calibration model **120** only for the absence of the checkerboard in the central portion, which central portion is instead completely empty except for the presence of a small arrow **128** parallel to the direction **x.**

Returning to **Figure 1****,** the calibration and reference models received from the server **110** are then printed on two separate sheets of paper - A4 or letter - with a printing device **130** connected to the client **105,** such as a printer. The sheet on which the calibration model is printed on will be henceforth referred to as calibration sheet, and identified with the reference number **140,** while the sheet on which the reference model is printed will be from now on defined as sheet reference, and identified with the reference **145.** The print is made without any scaling of the image, in such a way that the size and the reciprocal positions of the reference elements **124** and of the checkerboard **122** printed on the sheets **140, 145** coincide with the size and the predefined positions of the calibration and reference models **120, 125.**

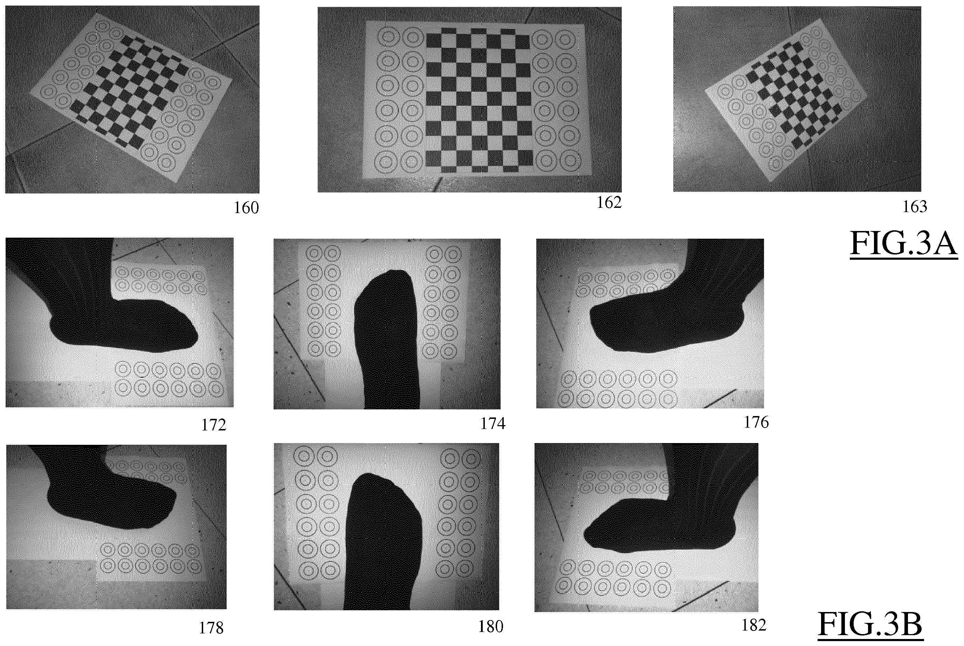

In accordance with an embodiment of the present invention, the user positions the calibration target **140** on a smooth surface such as the floor of a room and takes photos thereof from different positions by means of a digital image acquisition device **150,** such as a digital camera, being careful not to frame elements foreign to the sheet itself. Specifically, in accordance with an embodiment of the present invention, the calibration target **140** is photographed three times form three different points of view, so as to obtain three corresponding digital calibration photos, identified in the figure by the references **160, 162** and **163.** A possible example of calibration digital photos **160, 162** and **163** obtained by photographing the calibration sheet **140** from three different points of view is shown in **Figure 3A****.**

In accordance with an embodiment of the present invention, the user then positions the reference sheet **145** on the floor, preferably partially overlapping it to a blank white sheet in such a way that the white sheet protrudes from the central portion of the reference sheet **145** from the long side thereof opposite to that indicated by the arrow **128.**

Preferably wearing plain-colour dark socks, the user rests his left foot on the reference sheet **145,** aligning it with the direction of arrow **128,** being careful not to cover any reference element **124.** Specifically, the forefoot is positioned on the reference sheet **124** so as to completely cover the arrow **128** and do not extend beyond the edge of the reference sheet **145** corresponding to the long side indicated by the arrow **128;** since in general the foot of an adult person turns out to be longer than the width (along the **x**-axis) of the reference sheet **145,** the rear part of the foot will be at least partly resting on the white sheet that protrudes from the reference sheet **145.** In order to avoid that the action of the foot does not cause deformations on the reference sheet **145,** it is preferable that the floor on which the sheet is positioned has a rigid surface.

At this point, the user takes a photo of the left foot resting on the reference sheet **145** by three different positions using the camera **150** so as to always include the whole reference sheet **145** in the frame. Specifically, in accordance with an embodiment of the present invention, the left foot is first photographed from right to obtain a digital photo of the view from the right of the left foot **172** (hereinafter, simply "photo from the right of the left foot"), then the left foot is photographed from above to obtain a digital photo of the top view of the left foot **174** (hereinafter, simply "photo from the above of the left foot"), and finally the left foot is photographed from left to obtain a digital photo of the view from the left of the left foot **176** (hereinafter, simply "photo from the left of the left foot").

Similarly, the user then rests his right foot on the reference sheet **145** and performs the same operations done previously for the left foot, resulting in a photo from right of the right foot **178,** a photo from above of the right foot **180** and a photo from the left of the right foot **182.**

A possible example of photos of the feet **172-182** is shown in **Figure 3B****.**

The photos of the feet **172-182** and the calibration digital photos **160, 162** and **163** are then transferred to the client **105,** which forwards them to the server **110** via the interconnection network **115.**

The server **110** is coupled to a database **190** in which there are stored reference three-dimensional shapes derived from foot three-dimensional scans (both left feet and right feet). As will be described in detail in the following description, starting from the received photos, the server **110** performs processing and measurement operations, and consequently chooses a reference shape for the left foot and a reference shape for the right foot. Subsequently, the two selected reference shapes are changed in such a way as to fit as much as possible to the shapes of feet represented in the received photos **172-182.** The results of these operations are therefore two main sample three-dimensional shapes with features similar to those of the photographed feet.

In the database **190** (or in a further database coupled to the server **110**) there are also stored data regarding shapes and sizes of footwear which can be purchased by the user. Once the user has selected a desired model of footwear, the server **110** is configured to perform comparison operations between the two sample three-dimensional shapes previously calculated and the data relating to the selected shoe model, and to provide the user with the size number of the selected shoe model that is best suited for the feet of the user. In this way, the user is able to buy shoes online from home through the client **105,** without being forced to go in person at the store to test the size.

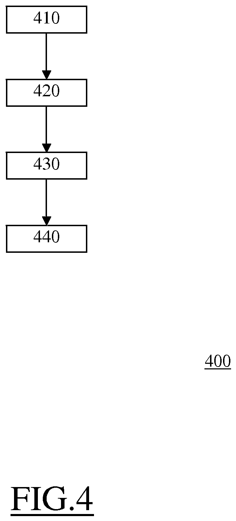

**Figure 4** is a flow diagram **400** which illustrates the main steps performed by the server **110** to generate the sample three-dimensional shapes to be used for choosing the size number of the user-selected footwear.

The first step executed by the server **110** (block **410**) relates to a calibration process that allows to characterize the camera **150** used to make the photos. Specifically, starting from calibration digital photos **160, 162** and **163,** the server **110** determines some parameters (henceforth referred to as "intrinsic parameters" of the camera) that characterize the camera **150,** such as the focal length, the main points, the distortion, the skew and the pixel error.

In the next step (block **420**), the server **110** carries out a series of operations on the photos of the feet **172-182** to extract from each of them a corresponding contour of the photographed foot, eliminating any other foreign element depicted in the photo. Starting from the contours extracted from the photos **172-182,** the server **110** determines the type of the photographed feet, for example by establishing if the photographed feet are of the egyptian, greek or roman types, if they are flat, hollow or normal, and if a bunion is present or not. The contours extracted from the photos are further used also to perform measurements, such as the fit size, the approximate length, the position of the great toe and the inclination of the feet relative to the axis of the reference sheet **145.** At this point, the server **110** selects among the reference three-dimensional shapes stored in the database **190** those that are best suited to the determined type of foot and to the results of measurements carried out on the contours (in particular, a reference three-dimensional shape for the left foot and a reference three-dimensional shape for the right foot).

In the third step (block **430**), the server **110** uses the intrinsic parameters of the camera **150** previously calculated to estimate the directions of the optical axis of the camera **150** with respect to the reference sheet **145** when the feet lateral photos, *i.e*., the photos **172, 176, 178** and **182** have been taken (the results of these estimates will be referred to as "extrinsic parameters" of the photos).

In the fourth step (block **440**), the server **110** uses the extrinsic parameters calculated in the third step to change the reference three-dimensional shapes selected in the second step in order to obtain the two sample three-dimensional shapes to be used for the choice of the size number of the footwear selected by the user.

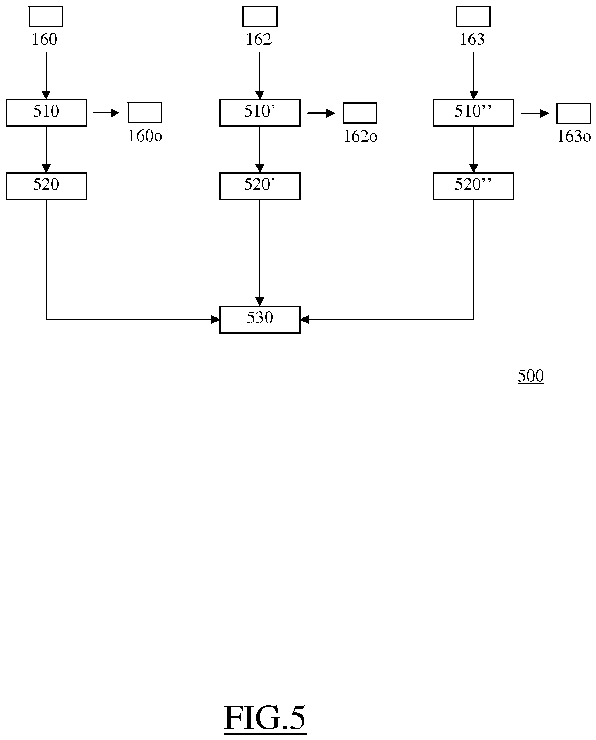

**Figure 5** is a flow diagram **500** which illustrates in greater detail the operations performed by the server **110** during the step **410** of the flowchart **400** of **Figure 4** corresponding to the characterization of the camera **150.**

This phase initially provides to perform the same sequence of operations for each of the three calibration digital photos **160, 162** and **163.** It has to be noted that the blocks of the flow diagram **500** corresponding to the operation sequences relating to the calibration digital photos **162** and **163** will be identified in figure with the same reference numerals used for the operations relating to the calibration digital photo **160,** except for the presence of one or two apexes, respectively.

Taking into account the sequence on the calibration digital photo **160,** the server **110** applies a homographic transformation to the calibration digital photo **160** (block **510**), so as to obtain a version of that photo (hereinafter referred to as "calibration homographed photo" and identified in the figures with the reference **160o)** in which the calibration sheet **140** is represented as if the photo was taken with the optical axis of the camera **150** aligned with the perpendicular of the centre of symmetry of the calibration sheet **140.** As it is well known to the skilled technicians, two different images of a same planar surface (such as the calibration sheet **140**) are always linked together by a corresponding homographic relationship. Using as a reference the centres of the reference elements **124** of the calibration sheet **140,** the server **110** carries out a homographic transformation of the calibration digital photo **160** in such a way that in the resulting calibration homographed photo **160o** all the reference elements **124** have the same size. It should be noted in fact that in the initial calibration digital photo **160,** the reference elements **124** in the foreground of the had radius greater than those of the reference elements **124** in the background. Without going into details known to those skilled in the art, the relation that links the image **160** to the calibration homographed photo **160o** is represented by a homography matrix determined by the homographic transformation that has been used. The advantage of the calibration homographed photo **160o** with respect to the calibration digital photo **162** is that in the homographed photo it is possible to make measurements of distances between points lying on the calibration sheet **140** through the calculation of a parameter that indicates the relationship between the magnitude of pixels of the photo and the actual distances on the calibration sheet **140 -** the latter being known as the size of the reference elements **124** are already known *a priori.* Using the calibration homographed photo **160o,** the server **110** performs well-known algorithms to identify all the intersections between adjacent squares of the checkerboard **122** (block **520**).

After having performed the operations described above on the remaining calibration digital photos **162** and **163,** too, the server **110** performs a calibration standard procedure (block **530**) using data collected relating to the intersections between adjacent squares of the checkerboard **122** of the three photos, calculating the intrinsic parameters characterizing the camera **150,** *i.e*., the focal length, the principal points, the distortion, the skew and the error pixels.

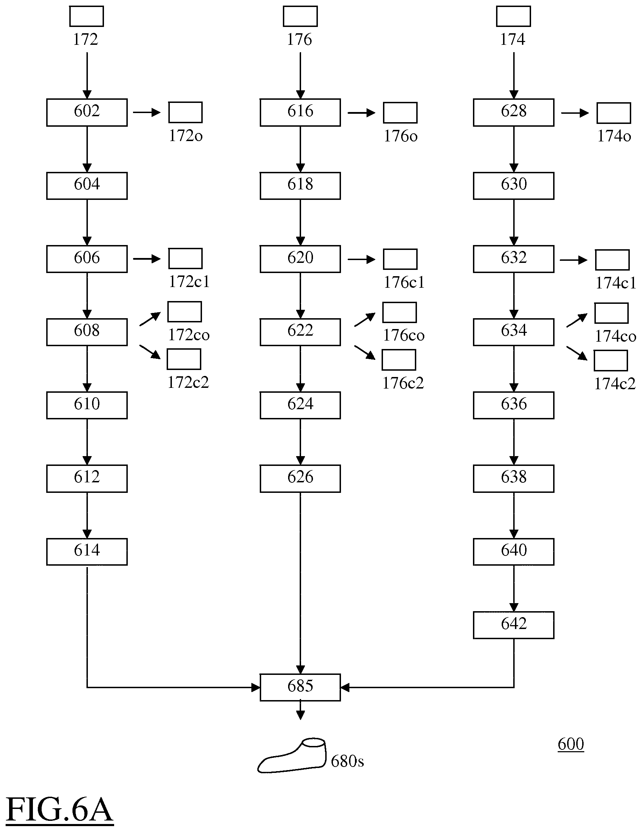

**Figure 6A** is a flow diagram **600** which illustrates in greater detail the operations performed by the server **110** during the step **420** of flowchart **400** of **Figure 4** corresponding to the selection of the reference three-dimensional shapes that best fit the shapes depicted in the photos of feet **172-182.**

This phase involves the execution of the same sequence of operations for both the left foot, *i.e*., in relation to the photos of feet **172,174** and **176,** and the right foot, *i.e*., in relation to the photos of feet **178, 180** and **182.** In order to ease the present description only the sequence of operations related to the left foot will be now described.

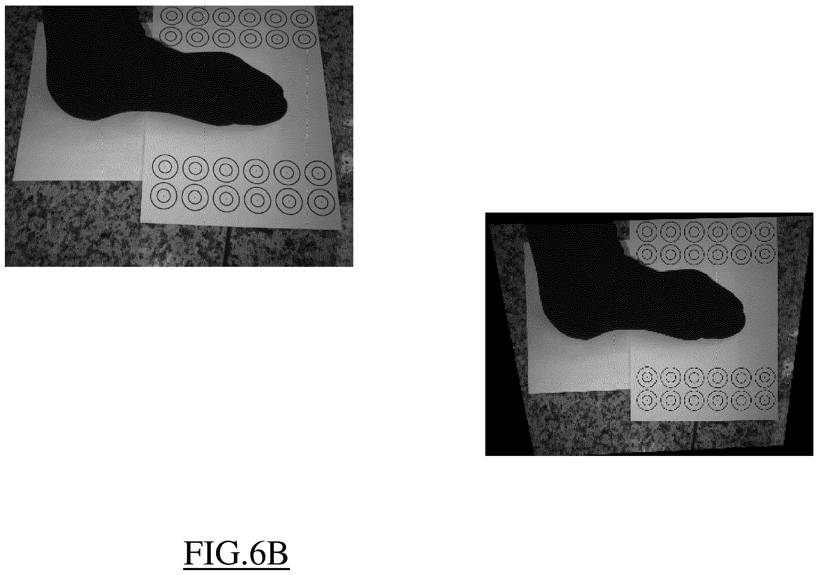

In an equivalent manner to the previous step, the server **110** applies a homographic transformation to the photo from right of the left foot **172** to obtain a corresponding homographed photo from right of the left foot **172o** in which the reference sheet **145** is represented as if the photo was taken with the optical axis of the camera **150** aligned with the perpendicular of the centre of symmetry of the reference sheet **145** itself (block **602**). Figure **6B** shows the photo from right of the left foot **172** and a homographed photo from right of the left foot **172o** generated after the homographic transformation.

The pixel size of the homographed photo from right of the left foot **172o,** although it is theoretically determined by the homography calculation, may have some small variations with respect to the ideal case. Consequently, this dimension is explicitly measured by the server **110** (block **604**) by measuring the distances in pixels between centres of the reference elements **124** which are further apart, and comparing this distance to the (note) actual size on the reference sheet **145.**

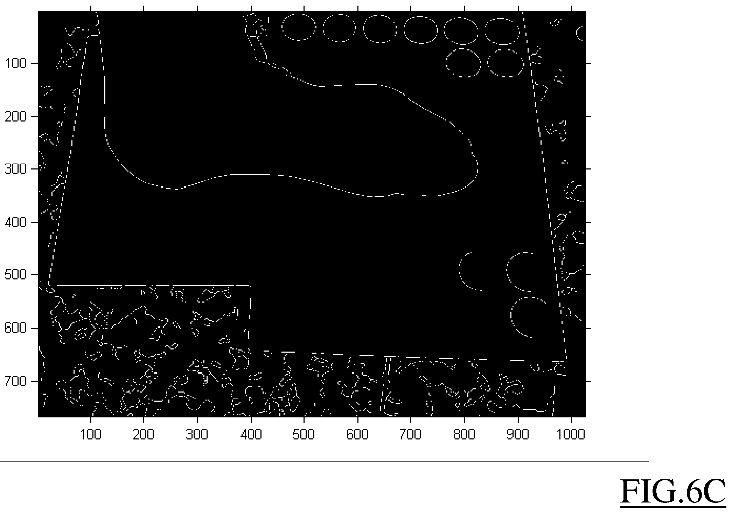

Next, using a series of known image processing algorithms, such as increase of contrast, blurring, dilatation according to specific patterns, application of closure operators, application of the Canny algorithm, a first contour **172c1** of the left foot photographed from right is extracted from the photo from right of the left foot **172** (block 606). A possible example of first contour **172c1** is illustrated in **Figure 6C****.**

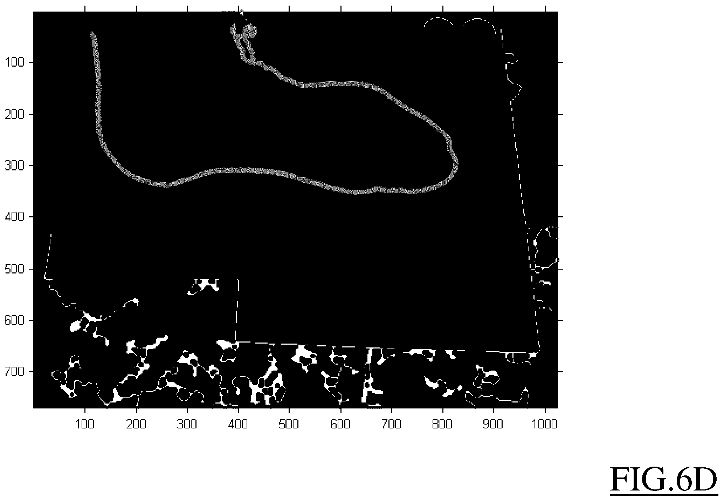

The first contour **172c1** is then subjected to further image processing operations to eliminate extraneous items reproduced in the photo (block **608**). For example, dilation and erosion operators are applied to the first contour **172c1,** the spurious edges are cleaned with the application of appropriate filters; further closure operators are then applied to the resulting image, and all the closed curves having a perimeter lower than a predetermined value are eliminated from the image. Finally, the homographic transformation used in the block **602** is applied to the resulting image, the server **110** determines the presumed position of the contour of the foot, and then deletes all the founded contours which are outside a certain area. As a result of the latter operations, a homographed version of the contour of the left foot photographed from right, identified in the figure with the reference **172co,** is obtained. Applying the homographic transformation being the inverse of the one just used for the homographed contour **172co,** the server **110** generates then a second, final, contour **172c2** of the left foot photographed from the right, an example of which is shown in **Figure 6D****.**

Through the contour **172c2** and the homographed contour **172co,** the server **110** is able to perform some initial measurements and classifications of the photographed foot.

In particular, observing the contour **172c2,** the server **110** recognizes if the photographed foot is a flat, hollow or normal foot (block **610**), since the view from the right of the left foot shows the inner side of the foot itself.

Starting instead from the homographed contour **172co,** the server **110** establishes the position of the great toe (block **612**), and performs an approximate measure of the length of the foot (block **614**) using the pixel size calculated at block **604.**

Turning now to the photo from the left of the left foot **176,** the server **110** applies a homographic transformation to this image to obtain a corresponding homographed photo from left of the left foot **176o** in which the reference sheet **145** is represented as if the photo was taken with the optical axis of the camera **150** aligned with the perpendicular to the centre of the reference sheet **145** itself (block **616**).

The pixel size of the homographed photo is measured by the server **110** (block **618**) in a manner similar to what was done for the photo **172o.**

At this point, using the previously mentioned image processing algorithms, a first contour **176c1** of the left foot photographed from left is extracted from the photo from left of the left foot **176** (block **620**).

The first contour **176c1** is then subjected to further image processing operations mentioned above to eliminate any extraneous item reproduced in the photo (block **622**). As a result of these operations it is obtained a homographed version of the contour of the left foot photographed from left **176co**. Applying the homographic transformation being the inverse of the one just used for the homographed contour **176co**, the server **110** then generates a second, final, contour **176c2** of the left foot photographed from the left.

Starting from the homographed contour **176co**, the server **110** establishes the position of the great toe (block **624**), and performs an approximate measure of the length of the foot (block **626**) using the pixel size calculated at block **618.**

Turning lastly to the photo from above of the left foot **174,** the server **110** applies a homographic transformation to this image to obtain a corresponding homographed photo from above of the left foot **174o** in which the reference sheet **145** is represented as if the photo had been taken with the optical axis of the camera **150** aligned with the perpendicular of the centre of the reference sheet **145** itself (block **628**).

The pixel size of this homographed photo is measured by the server **110** (block **630**) in a manner similar to what was done for the photos **172o** and **176o.**

At this point, using the previously mentioned image processing algorithms, a first contour **174c1** of the left foot photographed from above is extracted from the photo from above of the left foot (block **632**).

The first contour **174c1** is then subjected to the further image processing operations mentioned above to eliminate any extraneous item reproduced in the photo (block **634**). As a result of these operations a homographed version of the contour of the left foot photographed from above **174co** is obtained. Applying the homographic transformation being the inverse of the one just used for the homographed contour **174co,** the server **110** then generates a second, final, contour **174c2** of the left foot photographed from above.

Via the contour **174c2** and the homographed contour **174co,** the server **110** is able to carry out some further measurements and classifications of the photographed foot.

Specifically, observing the contour **174c2 -** and in particular the part of the contour relating to the area of the fingers -, the server **110** selects the morphological class of the photographed foot, *i.e*., determines whether the photographed foot is a so-called Greek, Roman or Egyptian foot, and whether or not there is a hallux valgus (block **636**). From the contour **174c2,** the server **110** also calculates the inclination of the photographed foot with respect to the axis passing through the arrow **128** of the reference sheet **145** (block **638**).

Starting instead from the homographed contour **174co,** the server **110** establishes the position of the great toe (block **640**) and carries out a first measurement of the width of the foot in the fit area (block **642**) using the pixel size calculated at block **630.**

At this point, on the basis of the measures and the results obtained by means of the operations described above, the server **110** accesses the database **190** and selects the reference three-dimensional shape of left foot **680s** which best suits them (block **685**). Specifically, starting from the entirety of reference three-dimensional shapes of left foot, the server **110** discards those not belonging to the morphological class determined at block **636** and to the type determined at block **610,** then select among the remaining shapes the one having the width in the fit area that is closer to the width calculated at block **642** and the length closest to the average between the lengths calculated at blocks **614, 626.**

The operations described above are then repeated on the photos **178, 180** and **182** of the right foot to select a corresponding reference three-dimensional shape of the right foot.

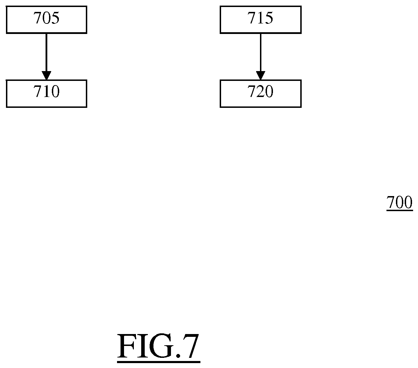

**Figure 7** is a flow chart **700** that illustrates in greater detail the operations performed by the server **110** during the step **430** of the flowchart **400** of **Figure 4** relating to the generation of extrinsic parameters of the photo of the feet **172, 176, 178** and **182.**

This phase involves the execution of the same sequence of operations for both the left foot, *i.e*., in relation to the photos of feet **172** and **176,** and the right foot, *i.e*., in relation to the photos of feet **178** and **182.** In order to ease the present description, only the sequence of operations on the left foot will therefore be described.

Referring in particular to the photo from right of the left foot **172,** the server **110** extracts the homography matrix determined by the homographic transformation used in block **602** of the flowchart **600** of **Figure 6A** (block **705**).

Exploiting the intrinsic parameters of the camera **150** previously calculated in block **503** of the flowchart **500** of **Figure 5****,** the server **110** performs a series of operations on the homography matrix relating to the homographic transformation used in block **602** for calculating the direction taken from the optical axis of the camera **150** with respect to the reference sheet **145** when the photo from right of the left foot **172** has been taken (block **710**). In greater detail, this direction is obtained by the server **110** through the computation of appropriate extrinsic parameters comprising a roto-translation matrix.

Turning now to the photo from left of the left foot **176,** the server **110** extracts the homography matrix determined by the homographic transformation used in the block **616** of the flowchart **600** of **Figure 6A** (block **715**).

Exploiting the intrinsic parameters of the camera **150** previously calculated in block **503** of the flowchart **500** of **Figure 5****,** the server **110** performs a series of operations on the homography matrix relating to the homographic transformation used in block **602** for calculating the direction taken by the optical axis camera **150** with respect to the reference sheet **145** when taking the photo from the left of the left foot **176** (block **720**). This direction is obtained by the server **110 by** calculating further extrinsic parameters comprising a further roto-translation matrix.

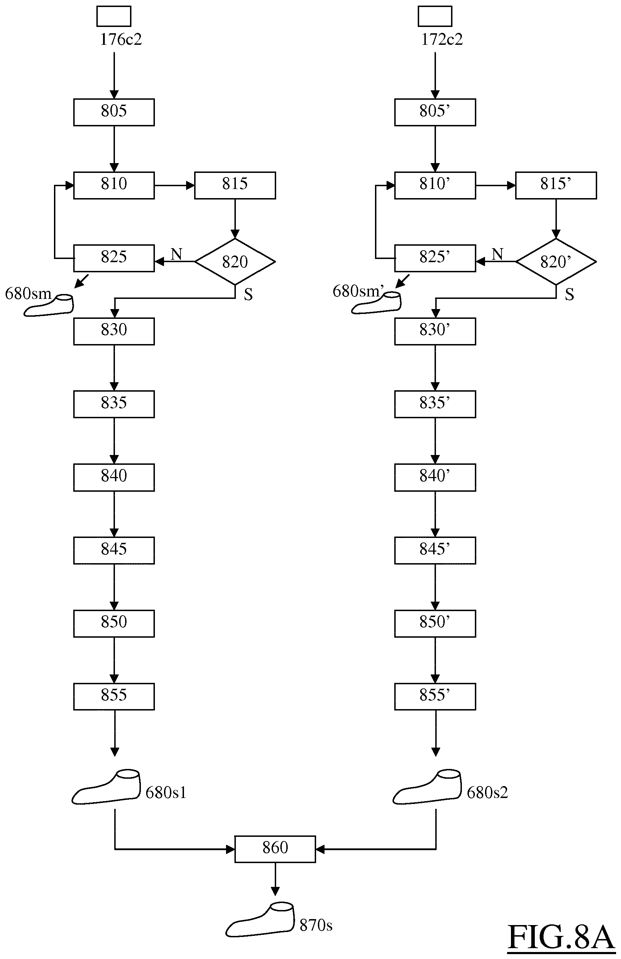

**Figure 8A** is a flow chart **800** that illustrates in greater detail the operations performed by the server **110** during the step **440** of the flowchart **400** of **Figure 4** corresponding to the generation of the two three-dimensional sample shapes to be used for choosing the size number of the shoes selected by the user.

As in the previous phases, this phase as well includes the execution of the same sequence of operations for both the left foot and the right foot. Consequently, in order to lighten the present description only the sequence of operations on the left foot will be described.

Moreover, this step initially involves that for each one of the two contours **176c2** (photo from left) and **172c2** (photo from right) a same sequence of operations is performed. The blocks of the flow chart **800** corresponding to the operations sequences relating to the contour **172c2** will be identified in the figure with the same references used for the operations relating to the contour **176c2,** except for the presence of an apex.

Taking into account the sequence relative to the contour **176c2,** the first operation performed by the server **110** consists in rotating the reference three-dimensional shape of the left foot **680s** selected in block **685** of flowchart the **600** of **Figure 6A** the same angle as previously calculated in block **638** of the flow chart **600** (block **805**), in such a way that the reference three-dimensional shape of the left foot **680s** has the same misalignment (with respect to the axis passing through the arrow **128** of the reference sheet 1**45)** of the photographed foot.

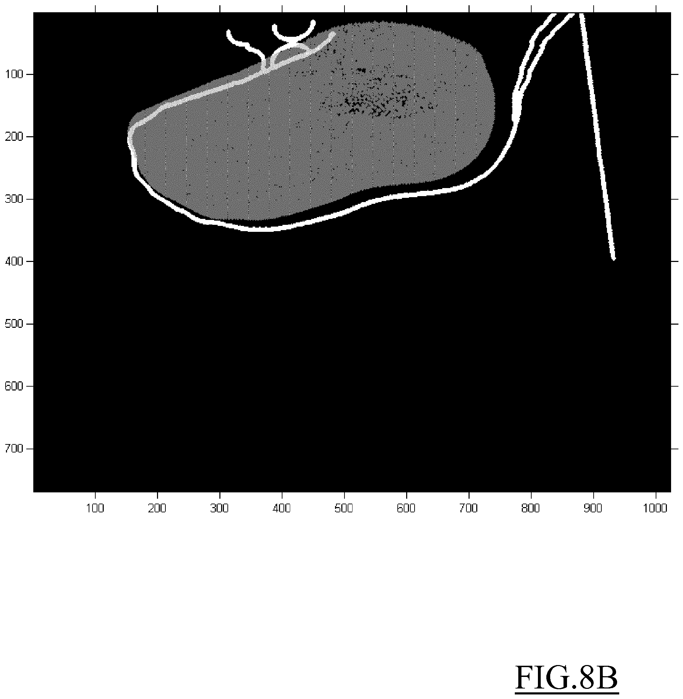

At this point, taking into account the intrinsic parameters of the camera **150,** the reference three-dimensional shape of the left foot **680s** is subjected to a roto-translation operation in accordance with the extrinsic parameters previously calculated in block **710** of the flowchart **700** of **Figure 7****;** in this way, the reference three-dimensional shape of the left foot **680s** is rotated so as to appear as if it was framed along the same direction that had the optical axis of the camera **150** with respect to the reference sheet **145** when the photography **176** was taken. A projection on the plane of the sheet of this so rotated and translated shape is then superimposed on the contour **176c2,** with the great toe of the reference three-dimensional shape of the left foot **680s** superimposed on the position of the great toe in the contour **176c2** (block **810**). **Figure 8B** shows an example of a projection of reference three-dimensional shape of the left foot **680s** superimposed on the contour **176c2.**

In general, the reference three-dimensional shape of the left foot **680s** will have size that are different from those of the photographed foot, consequently in accordance with an embodiment of the present invention, the server **110** determines deformation vectors to be applied to the reference three-dimensional shape in order to maximize the fitting between the projection of the three-dimensional shape on the surface of the sheet and the contour **176c2.**

In particular, the evaluation of the adaptation quality is carried out by the server **110** by calculating a figure of merit to be minimized, depending on the sum of the absolute values of the differences between the contours of the foot and the contours of the projection of the three-dimensional shape (block **815**). In accordance with an embodiment of the present invention, a greater weight is given in the figure of merit to the differences along the **x** direction (*i.e*., along the direction parallel to the arrow **128** of the reference sheet **145**), as the most important thing is that the resulting sample three-dimensional shape to be used for the choice of the size number has the length as close as possible to that of the photographed foot.

If the value of the figure of merit turns out to be greater than a predetermined minimum threshold (output branch **N** of block **820**), it means that the adaptation is not sufficient, and therefore it is necessary to lengthen or shorten the reference three-dimensional shape of the left foot **680s** in order to obtain a corresponding modified three-dimensional shape of the left foot **680sm** (block **825**). In accordance with an embodiment of the present invention, the modified three-dimensional shape of the left foot **680sm** is obtained by deforming (by lengthening or shortening) the reference three-dimensional shape **680s** of the left foot in a uniform manner (isotropic deformation) along all the three directions **x, y** and **z** (where **z** is the direction perpendicular to the plane defined by the x and y axes, *i.e*., perpendicular to the reference sheet **145**). Note that at each point of the modified three-dimensional shape of the left foot **680sm** corresponds a respective point of the reference three-dimensional shape of the left foot **680s.**

At this point, the projection of the modified three-dimensional shape of the left foot **680sm** is superimposed on the contour **176c2** (return to block **810**).

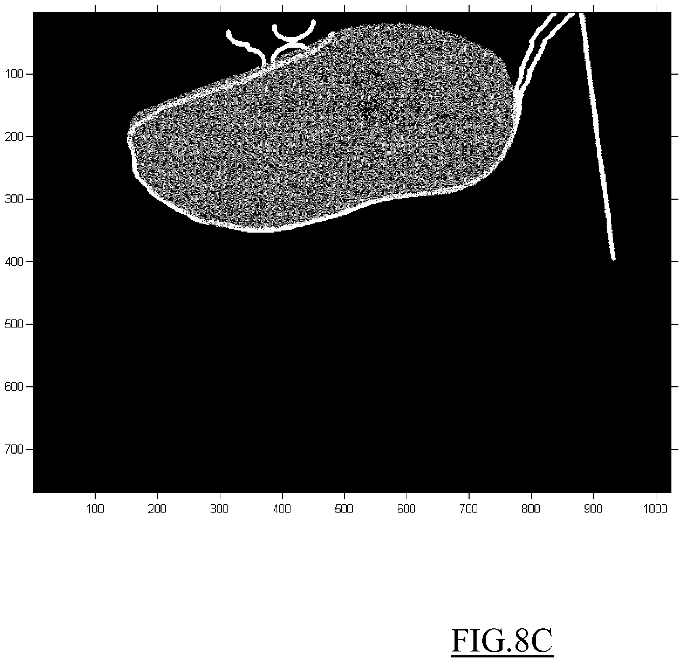

The iterative cycle ends when the value of the figure of merit falls below the predetermined minimum threshold (output branch S of block **820**); **Figure 8C** shows an example of a projection of modified three-dimensional shape of the left foot **680sm** superimposed on the contour **176c2** wherein the figure of merit is minimized.

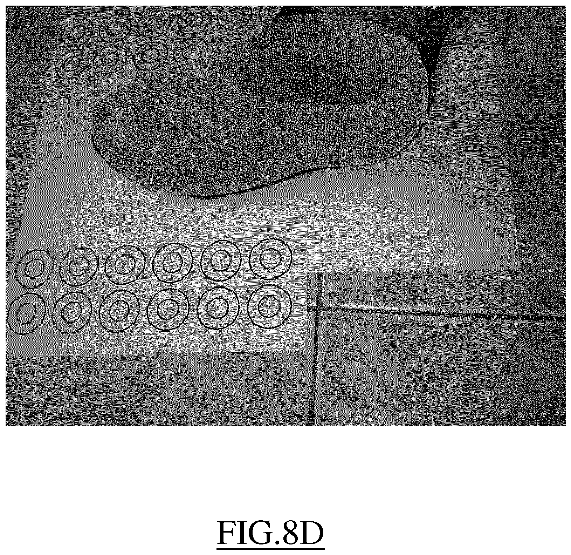

Subsequently, referring to **Figure 8D****,** the projection of modified three-dimensional shape of the left foot **680sm** result of the previous operations is superimposed on the photo from left of the left foot **176,** with the great toe of the modified three-dimensional shape of the left foot **680sm** superimposed on the position of the great toe in the photo **176;** the server **110** then identifies on the photo the point **p1** belonging to the projection having the minimum value of the x coordinate and the point **p2** belonging to the projection having the maximum value of the **x** coordinate (block **830**). The point **p1** will be in correspondence of the great toe, while the point **p2** will be at the heel.

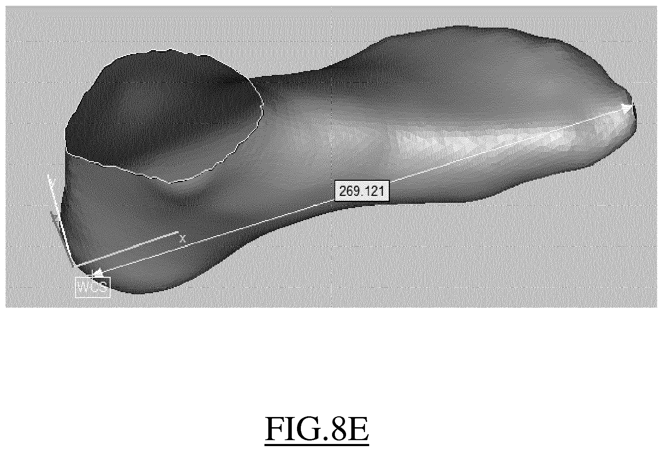

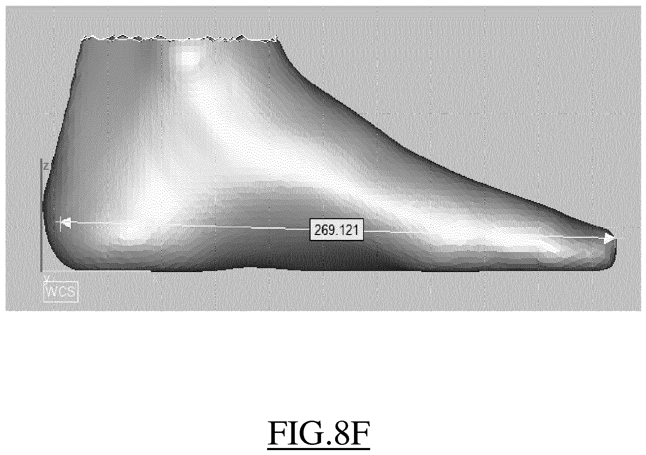

The three-dimensional position of such points **p1** and **p2** is then identified on the reference three-dimensional shape of the left foot **680s** (block **835**). This identification is carried out taking into account that at each point of the modified three-dimensional shape of the left foot **680sm** corresponds a respective point of the reference three-dimensional shape of the left foot **680s.** Note that, as shown in the example illustrated in **Figure 8E** and **8F****,** the points **p1** and **p2** will generally be positioned at different heights on the three-dimensional shape.

The points **p1** and **p2** on the reference three-dimensional shape of the left foot **680s** are then projected on the support surface of the form itself (block **840**), obtaining two corresponding projected points **p1p** and **p2p;** the supporting plane of the three-dimensional shape corresponds to the plan containing the reference sheet **145** in the photo **176.** In general, the distance *Dpp* between the projected points **p1p** and **p2p** will be smaller than the distance *Dp* between points **p1** and **p2.**

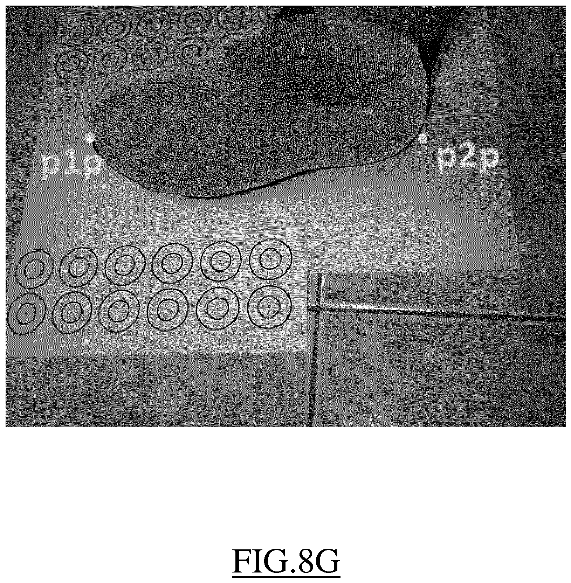

The newly calculated positions of the two projected points **p1p** and **p2p** are then modified by applying the same deformations used to obtain the modified three-dimensional shape of the left foot **680sm** from the reference three-dimensional shape of the left foot **680;** at this point, as shown in **Figure 8G****,** points **p1p** and **p2p** are projected on the photo from left of the left foot **176** (block **845**).

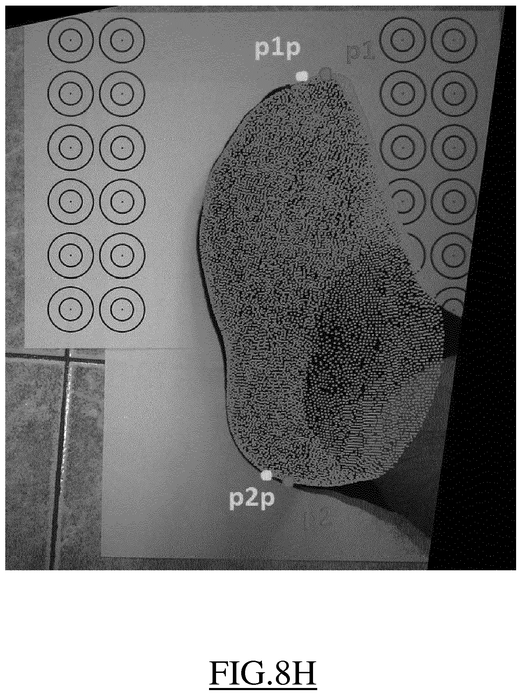

As shown in **Figure 8H****,** the homographic transformation previously used is applied to the photo **176,** to allow the measurement of the real distance *Dppr* between the points **p1p** and **p2p** (block **850**). It is emphasized that this distance measurement is possible because in the photo **176** points **p1p** and **p2p** lie on the reference sheet **145,** and the pixel size has been calculated previously in the block **618** of the flowchart **600** of **Figure 6A****.**

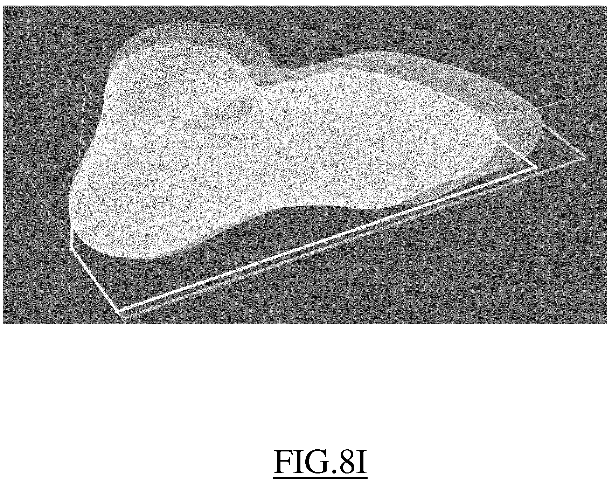

As shown in **Figure 8I**, once the distance *Dppr* is measured, the reference three-dimensional shape of the left foot **680s** is deformed along the direction passing through the projected points **p1p** and **p2p** (anisotropic deformation) so that the distance *Dpp* between projected points **p1p** and **p2p** coincides with the distance *Dppr* measured on the homography (block **855**). Note that the direction passing through the projected points **p1p** and **p2p,** and therefore the corresponding deformation of the three-dimensional shape of the left foot, is substantially parallel to the axis **x,** *i.e*., it is substantially along the length direction of the foot.

Following the application of this deformation, the reference three-dimensional shape of the left foot **680s** is further deformed along the **y** axis (anisotropic deformation) so as to assume a width coinciding with that calculated at block **642** of the flowchart **600** of **Figure 6A****.**

At the end of the last transaction, a first adapted reference three-dimensional shape of left foot **680s1** is thus obtained.

After performing the above steps (blocks **805'-855'**) also on the contour **172c2** (photo from right), a second adapted reference three-dimensional shape of left foot **680s2** is thus obtained.

Finally, the server **110** generates a sample three-dimensional shape of left foot **870s** by making an average between the first adapted reference three-dimensional shape of left foot **680s1** and the second adapted reference three-dimensional shape of left foot **680s2** (block **860**).

Repeating all the operations performed in the flowchart **800** for the right foot, the server **110** also generates a sample three-dimensional shape of right foot.

At this point, once the user has selected a desired model of footwear, the server **110** makes a comparison between the two sample three-dimensional shapes just calculated and the data relating to the selected shoe model, and provides the user with the size number of the selected footwear model that best fits the user's foot.

Naturally, in order to satisfy contingent and specific requirements, an expert in the art may introduce to the solution described above many modifications and variations. More specifically, although such a solution has been described with a certain level of detail with reference to one or more embodiments thereof, it is clear that various omissions, substitutions and changes in form and details as well as other embodiments are possible. In particular, various embodiments of the invention may be practiced without the specific details given in the above description to provide a more complete understanding of them; on the contrary, well-known characteristics may be omitted or simplified in order not to obscure the description with unnecessary detail. Furthermore, it is expressly understood that the specific elements and/or method steps described in relation to each embodiment of the solution exposed may be incorporated in any other embodiment as a normal range of drawing.

For example, although description has been made explicitly reference to a method for the optimised selection of the size of a shoe, similar considerations may apply in the case of articles of clothing of different types, such as gloves (in this case the photo will cover the hands of the user) or hats (in this case, the photos will cover the head of the user).

## Claims

1. Method **(400)** for selecting the size of a shoe or clothing article, the method comprising the following phases:
- acquiring at least a digital photo of a body part **(172** - **182)** of a subject associated with a reference graphic element **(145),** said body part corresponding to the article;
**characterized in that** the method further comprises:
- selecting **(420)** one among a plurality of predefined three-dimensional models **(680s)** of the photographed body part according to said at least one digital photo by exploiting said reference graphic element, and
- determining **(440)** the size of the article based on the selected predefined model. wherein the phase of determining comprises:
a) rotating **(805)** the selected predefined model in such a way that its orientation in the space corresponds to that of such body part from the point of view of the digital photo;
b) making **(810)** a predefined portion of the rotated selected predefined model to match with a corresponding portion of said body part;
c) deforming **(825)** the rotated selected predefined model in such a way to make at least one portion of the contour of the selected model to substantially match with a corresponding portion of the contour of said body part extracted from said at least one digital photo.

2. Method according to claim 1, wherein the phase of determining further comprises:
d) selecting **(830)** at least two reference points located on the contour of the rotated and deformed selected predefined model;
e) tracing **(835)** the position of said two reference points in the starting selected predefined model;
f) determining **(840)** two projection points representing the projections on a predefined plane of said two reference points in the starting selected predefined model;
g) determining **(845)** the position of further two projection points on said predefined plane, corresponding to said two projection points and obtained starting from the latter further to a repetition of the phases a), b) and c);
h) measuring **(850)** the distance between said further two projection points;
i) deforming **(855)** said starting selected predefined model until the distance between said projection points equals the distance measured in phase h).

3. Method according to claim 2 for selecting the size of a shoe article, wherein said body part is a foot, said three-dimensional model is a foot three-dimensional model chosen among a plurality of foot three-dimensional models, and wherein:
- the deformations carried out in phases c) and g) are isotropic,
- the deformation carried out in phase i) is anisotropic substantially along the length of the foot.

4. Method according to claim 3, wherein said at least one digital photo of the foot comprises at least one digital photo **(174, 180)** with a view from the above of the foot and a digital photo **(172, 176, 178, 182)** with a view from the side of the foot, and wherein the method comprises:
- extracting **(606, 608, 620, 621)** from the photos respective foot contours, the contour extracted from the photo with the view from the side being the contour of the phase c);
- obtaining **(640)** from the contour extracted from the photo with the view from the above of the foot an indication of the width of the foot;
- after the phase i), anisotropically deforming along the width direction the predefined model already deformed in phase i) by an amount corresponding to the foot width indication.

5. The method according to claim 4, wherein said reference graphic element comprises a predefined pattern of reference signs arranged in such a way to surround at least a portion of the foot in said at least one digital photo, and wherein the phase h) comprises:
- carrying out an homographic transformation of said at least one photo with said two further projection points that are superimposed thereon, by exploiting said pattern of reference signs for a corresponding homographed photo of the foot wherein the reference signs appear as the photo was taken from a point of view that is perpendicular to the symmetry center of the reference graphic element;
- measuring the distance between said two further projection points on the homographically transformed photo.

6. Method according to claim 5, wherein said selecting one among a plurality of predefined three-dimensional models comprise extrapolating **(610, 636)** from such at least one photo distinguishing parameters obtained from an analysis of said contours of the foot extracted from the at least one photo.

7. Method according to claim 6, wherein said distinguishing parameters comprise at least one among:
- Greek, Roman or Egyptian morphologic classes of the photographed foot;
- presence or absence of bunion;
- flat foot or claw-foot features;
- great toe position;
- instep width;
- approximate length of the foot.

8. Method according to any one among claims 4 to 7, wherein the phase of determining further comprises comparing the predefined model anisotropically deformed along the length direction and along the width direction of the foot with data relating to a selected shoe model.

9. System for selecting the size of a shoe or clothing article, said system comprising:
- means **(150)** for acquiring at least a digital photo of a body part of a subject associated with a reference graphic element **(145),** said body part corresponding to the article;
**characterized in that** the system further comprises
- means **(110)** for selecting one among a plurality of predefined three-dimensional models of the photographed body part according to said at least one digital photo by exploiting said reference graphic element, and
- means **(110)** for determining the size of the article based on the selected predefined model;
- means for rotating the selected predefined model in such a way its orientation in the space corresponds to that of such body part from the point of view of the digital photo;
- means for making a predefined portion of the rotated selected predefined model to match with a corresponding portion of said body part;
- means for deforming the rotated selected predefined model in such a way to make at least one portion of the contour of the selected model to substantially match with a corresponding portion of the contour of said body part extracted from said at least one digital photo..

## Patentansprüche

1. Verfahren (400) zum Auswählen der Größe eines Schuhs oder eines Bekleidungsartikels, wobei das Verfahren die folgenden Phasen aufweist:
- Aufnehmen mindestens eines digitalen Fotos eines Körperteils (172 - 182) einer Person, der einem graphischen Referenzelement (145) zugeordnet ist, wobei der Körperteil dem Artikel entspricht;
**dadurch gekennzeichnet, dass** das Verfahren ferner aufweist:
- Auswählen (420) von einem aus einer Vielzahl von vordefinierten dreidimensionalen Modellen (680s) des fotografierten Körperteils gemäß dem mindestens einen digitalen Foto durch Ausnutzen des graphischen Referenzelements, und
- Bestimmen (440) der Größe des Artikels auf der Basis des ausgewählten vordefinierten Modells,
wobei die Phase des Bestimmens aufweist:
a) Drehen (805) des ausgewählten vordefinierten Modells auf eine solche Weise, dass seine Orientierung im Raum jener eines solchen Körperteils von der Perspektive des digitalen Fotos entspricht;
b) Bewirken (810), dass ein vordefinierter Abschnitt des gedrehten ausgewählten vordefinierten Modells mit einem entsprechenden Abschnitt des Körperteils übereinstimmt;
c) Verformen (825) des gedrehten ausgewählten vordefinierten Modells auf eine solche Weise, dass bewirkt wird, dass zumindest ein Abschnitt der Kontur des ausgewählten Modells im Wesentlichen mit einem entsprechenden Abschnitt der Kontur des Körperteils übereinstimmt, der aus dem mindestens einen digitalen Foto extrahiert wird.

2. Verfahren nach Anspruch 1, wobei die Phase des Bestimmens ferner aufweist:
d) Auswählen (830) von mindestens zwei Referenzpunkten, die auf der Kontur des gedrehten und verformten ausgewählten vordefinierten Modells angeordnet sind;
e) Verfolgen (835) der Position der zwei Referenzpunkte im ausgewählten vordefinierten Ausgangsmodell;
f) Bestimmen (840) von zwei Projektionspunkten, die die Projektionen auf eine vordefinierte Ebene der zwei Referenzpunkte im ausgewählten vordefinierten Ausgangsmodell darstellen;
g) Bestimmen (845) der Position von zwei weiteren Projektionspunkten in der vordefinierten Ebene, die den zwei Projektionspunkten entsprechen und ausgehend von den letzteren erhalten werden im Anschluss an eine Wiederholung der Phasen a), b) und c);
h) Messen (850) des Abstandes zwischen den weiteren zwei Projektionspunkten;
i) Verformen (855) des ausgewählten vordefinierten Ausgangsmodells, bis der Abstand zwischen den Projektionspunkten gleich dem in Phase h) gemessenen Abstand ist.

3. Verfahren nach Anspruch 2 zum Auswählen der Größe eines Schuhartikels, wobei der Körperteil ein Fuß ist, wobei das dreidimensionale Modell ein dreidimensionales Fußmodell ist, das aus einer Vielzahl von dreidimensionalen Fußmodellen ausgewählt ist, und wobei:
- die in den Phasen c) und g) ausgeführten Verformungen isotrop sind,
- die in Phase i) ausgeführte Verformung entlang der Länge des Fußes im Wesentlichen anisotrop ist.

4. Verfahren nach Anspruch 3, wobei das mindestens eine digitale Foto des Fußes mindestens ein digitales Foto (174, 180) mit einer Ansicht des Fußes von oben und ein digitales Foto (172, 176, 178, 182) mit einer Ansicht von der Seite des Fußes aufweist, und wobei das Verfahren aufweist:
- Extrahieren (606, 608, 620, 621) von jeweiligen Fußkonturen aus den Fotos, wobei die aus dem Foto mit der Ansicht von der Seite extrahierte Kontur die Kontur der Phase c) ist;
Erhalten (640) einer Angabe der Breite des Fußes aus der aus dem Foto mit der Ansicht des Fußes von oben extrahierten Kontur;
- nach der Phase i) anisotropes Verformen des bereits in Phase i) verformten vordefinierten Modells entlang der Breitenrichtung um ein Maß, das der Fußbreitenangabe entspricht.

5. Das Verfahren nach Anspruch 4, wobei das graphische Referenzelement ein vordefiniertes Muster von Referenzzeichen aufweist, die auf eine solche Weise angeordnet sind, dass sie zumindest einen Abschnitt des Fußes in dem mindestens einen digitalen Foto umgeben, und wobei die Phase h) aufweist:
- Ausführen einer homographischen Transformation des mindestens einen Fotos mit den zwei weiteren Projektionspunkten, die darauf überlagert sind, durch Ausnutzen des Musters von Referenzzeichen für ein entsprechendes homographiertes Foto des Fußes, wobei die Referenzzeichen erscheinen, als das Foto von einer Perspektive aufgenommen wurde, die zum Symmetriezentrum des graphischen Referenzelements senkrecht ist;
- Messen des Abstandes zwischen den zwei weiteren Projektionspunkten auf dem homographisch transformierten Foto.

6. Verfahren nach Anspruch 5, wobei das Auswählen von einem aus einer Vielzahl von vordefinierten dreidimensionalen Modellen das Extrapolieren (610, 636) von Unterscheidungsparametern von mindestens einem solchen Foto aufweist, die aus einer Analyse der Konturen des Fußes erhalten werden, die aus dem mindestens einen Foto extrahiert werden.

7. Verfahren nach Anspruch 6, wobei die Unterscheidungsparameter mindestens einen aufweisen unter:
- griechischen, römischen oder ägyptischen morphologischen Klassen des fotografierten Fußes;
- der Anwesenheit oder Abwesenheit eines Ballenzehs;
- Plattfuß- oder Klauenfußmerkmalen;
- der Position des großen Zehs;
- der Spannweite;
- der ungefähren Länge des Fußes.

8. Verfahren nach einem der Ansprüche 4 bis 7, wobei die Phase des Bestimmens ferner das Vergleichen des vordefinierten Modells, das entlang der Längenrichtung und entlang der Breitenrichtung des Fußes anisotrop verformt ist, mit Daten in Bezug auf ein ausgewähltes Schuhmodell aufweist.

9. System zum Auswählen der Größe eines Schuhs oder eines Bekleidungsartikels, wobei das System aufweist:
- Mittel (150) zum Aufnehmen mindestens eines digitalen Fotos eines Körperteils einer Person, der einem graphischen Referenzelement (145) zugeordnet ist, wobei der Körperteil dem Artikel entspricht;
**dadurch gekennzeichnet, dass** das System ferner aufweist
- Mittel (110) zum Auswählen von einem aus einer Vielzahl von vordefinierten dreidimensionalen Modellen des fotografierten Körperteils gemäß dem mindestens einen digitalen Foto durch Ausnutzen des graphischen Referenzelements, und
- Mittel (110) zum Bestimmen der Größe des Artikels auf der Basis des ausgewählten vordefinierten Modells;
- Mittel zum Drehen des ausgewählten vordefinierten Modells auf eine solche Weise, dass seine Orientierung im Raum jener eines solchen Körperteils von der Perspektive des digitalen Fotos entspricht;
- Mittel zum Bewirken, dass ein vordefinierter Abschnitt des gedrehten ausgewählten vordefinierten Modells mit einem entsprechenden Abschnitt des Körperteils übereinstimmt;
- Mittel zum Verformen des gedrehten ausgewählten vordefinierten Modells auf eine solche Weise, dass bewirkt wird, dass mindestens ein Abschnitt der Kontur des ausgewählten Modells im Wesentlichen mit einem entsprechenden Abschnitt der Kontur des Körperteils übereinstimmt, der aus dem mindestens einen digitalen Foto extrahiert wird.

## Revendications

1. Procédé (400) pour sélectionner la taille d'un article, chaussure ou vêtement, le procédé comprenant les phases suivantes :
- acquérir au moins une photo numérique d'une partie du corps (172 - 182) d'un sujet associée à un élément graphique de référence (145), la partie du corps correspondant à l'article ;
**caractérisé en ce que** le procédé comprend en outre :
- sélectionner (420) un modèle parmi une pluralité de modèles tridimensionnels prédéfinis (680) de la partie du corps photographiée d'après ladite au moins une photo numérique en exploitant l'élément graphique de référence, et
- déterminer (440) la taille de l'article sur la base du modèle prédéfini sélectionné, la phase de détermination comprenant :
a) faire tourner (805) le modèle prédéfini sélectionné de telle sorte que son orientation dans l'espace corresponde à celle d'une telle partie du corps depuis le point de vue de la photo numérique ;
b) faire concorder (810) une portion prédéfinie du modèle prédéfini sélectionné tourné avec une portion correspondante de ladite partie du corps ;
c) déformer (825) le modèle prédéfini sélectionné tourné de manière à faire en sorte qu'au moins une portion du contour du modèle sélectionné concorde sensiblement avec une portion correspondante du contour de la partie du corps extraite de ladite au moins une photo numérique.

2. Procédé selon la revendication 1, dans lequel la phase de détermination comprend en outre :
d) sélectionner (830) au moins deux points de référence situés sur le contour du modèle prédéfini sélectionné tourné et déformé ;
e) tracer (835) la position des deux points de référence dans le modèle prédéfini sélectionné de départ ;
f) déterminer (840) deux points de projection représentant les projections sur un plan prédéfini des deux points de référence dans le modèle prédéfini sélectionné de départ ;
g) déterminer (845) la position de deux autres points de projection sur le plan prédéfini, correspondant aux deux points de projection et obtenus en démarrant à partir de ce dernier en répétant des phases a), b) et c) ;
h) mesurer (850) la distance entre les deux autres points de projection ;
i) déformer (855) le modèle prédéfini sélectionné de départ jusqu'à ce que la distance entre les points de projection soit égale à la distance mesurée dans la phase h).

3. Procédé selon la revendication 2, pour sélectionner la taille d'une chaussure, dans lequel la partie du corps est un pied, le modèle tridimensionnel étant un modèle tridimensionnel de pied choisi parmi une pluralité de modèles tridimensionnels de pieds, et dans lequel :
- les déformations réalisées dans les phases c) et g) sont isotropes,
- la déformation réalisée dans la phase i) est anisotrope sensiblement suivant la longueur du pied.

4. Procédé selon la revendication 3, dans lequel ladite au moins une photo numérique du pied comprend au moins une photo numérique (174, 180) avec une vue depuis le dessus du pied et une photo numérique (172, 176, 178, 182) avec une vue depuis le côté du pied, et dans lequel le procédé comprend :
- extraire (606, 608, 620, 621) à partir des photos des contours de pieds respectifs, le contour extrait de la photo avec la vue depuis le côté étant le contour de la phase c) ;
- obtenir (640) à partir du contour extrait de la photo avec la vue depuis le dessus du pied une indication de la largeur du pied ;
- après la phase i), déformer de façon anisotrope suivant la direction de la largeur le modèle prédéfini déjà déformé dans la phase i) d'une quantité correspondant à l'indication de largeur du pied.

5. Procédé selon la revendication 4, dans lequel l'élément graphique de référence comprend un motif prédéfini de signes de référence agencé de manière à entourer au moins une portion du pied dans ladite au moins une photo numérique, et dans lequel la phase h) comprend :
- réaliser une transformation homographique de ladite au moins une photo avec les deux autres points de projection qui sont superposés dessus, en exploitant le motif de signes de référence pour une photo homographe correspondante du pied dans laquelle les signes de référence apparaissent comme si la photo avait été prise d'un point de vue qui est perpendiculaire au centre de symétrie de l'élément graphique de référence ;
- mesurer la distance entre les deux autres points de projection sur la photo transformée de façon homographique.

6. Procédé selon la revendication 5, dans lequel la sélection d'un modèle parmi une pluralité de modèles tridimensionnels prédéfinis comprend une extrapolation (610, 636) à partir de ladite au moins une photo de paramètres distinctifs obtenus à partir d'une analyse des contours du pied extraits de ladite au moins une photo.

7. Procédé selon la revendication 6, dans lequel les paramètres distinctifs comprennent au moins l'un des éléments suivantes :
- des classes morphologiques grecque, romaine ou égyptienne du pied photographié ;
- la présence ou l'absence d'oignon ;
- des éléments caractéristiques de pied plat ou de pied creux ;
- la position du grand orteil ;
- la largeur du cou-de-pied ;
- la longueur approximative du pied.

8. Procédé selon l'une quelconque des revendications 4 à 7, dans lequel la phase de détermination comprend en outre la comparaison du modèle prédéfini déformé de façon anisotrope suivant la direction de la longueur et suivant la direction de la largeur du pied à des données concernant un modèle de chaussure sélectionné.

9. Système pour sélectionner la taille d'un article, chaussure ou vêtement, le système comprenant :
des moyens (150) pour acquérir au moins une photo numérique d'une partie du corps d'un sujet associée à un élément graphique de référence (145), la partie du corps correspondant à l'article ;
**caractérisé en ce que** le système comprend en outre :
- des moyens (110) pour sélectionner un modèle parmi une pluralité de modèles tridimensionnels prédéfinis de la partie du corps photographiée d'après ladite au moins une photo numérique en exploitant l'élément graphique de référence, et
- des moyens (110) pour déterminer la taille de l'article sur la base du modèle prédéfini sélectionné ;
- des moyens pour faire tourner le modèle prédéfini sélectionné de telle sorte que son orientation dans l'espace corresponde à celle d'une telle partie du corps depuis le point de vue de la photo numérique ;
- des moyens pour faire concorder une portion prédéfinie du modèle prédéfini sélectionné tourné avec une portion correspondante de la partie du corps ;
- des moyens pour déformer le modèle prédéfini sélectionné tourné de manière à faire en sorte qu'au moins une portion du contour du modèle sélectionné concorde sensiblement avec une portion correspondante du contour de la partie du corps extraite de ladite au moins une photo numérique.
